# EUROPEAN PATENT SPECIFICATION

(11) **EP 1 175 376 B1**
(45) Date of publication and mention of the grant of the patent: **08.02.2006**
(21) Application number: 00908848.5
(22) Date of filing: 17.03.2000
(51) Int. Cl.: C02F 11/10, C10B 53/00

(54) **PROCESS AND APPARATUS FOR THE CONVERSION OF CARBONACEOUS MATERIALS**
VERFAHREN UND VORRICHTUNG ZUR UMWANDLUNG VON KOHLENSTOFFHALTIGEN MATERIALEN
PROCEDE ET APPAREIL DE CONVERSION DE MATIERES CARBONEES

(30) Priority: 22.03.1999 AU PP936099
(43) Date of publication of application: 30.01.2002
(73) Proprietor: Environmental Solutions International Ltd, Victoria Park Western Australia 6100 (AU)
(72) Inventor: BRIDLE, Trevor, Redvers, Perth, W.A. 6000 (AU); SKRYPSKI-MANTELE, Stefan, D-77773 Schenkenzell (DE)
(74) Representative: Lyons, Andrew John
(86) International application number: PCT/AU2000/000206
(87) International publication number: WO 2000/056671

(56) References cited:
- EP-A- 0 140 811
- EP-A- 0 373 577
- DE-A- 3 221 495
- US-A- 4 334 026
- US-A- 5 114 541
- US-A- 5 847 248
- US-A- 5 865 956

## Description

### Field of the Invention

The present invention relates to a process and apparatus for the conversion of carbonaceous materials. More particularly, the process and apparatus of the present invention provides an improvement to the oil product of the conversion of the organic components of sewage and industrial sludges.

### Discussion of the Prior Art

Sewage sludge is an unavoidable by-product of the treatment of sewage and other wastewaters. Traditionally, disposal of such sludge is expensive and typically constitutes half of the total annual costs of wastewater treatment. Historically, the major sludge disposal options have included agricultural utilisation, landfilling and incineration. Also historically, wastewater treatment plants have been designed to minimise sludge production and most effort is expended to stabilise and reduce the sludge volume prior to disposal or utilisation.

The solids component of sewage sludge comprises a mixture of organic materials composed of mostly crude proteins, lipids and carbohydrates. These solids further comprise inorganic materials such as silt, grit, clay and lower levels of heavy metals. For example, a typical raw sewage sludge comprises approximately 50 to 90% volatile matter and 25 to 40% organic carbon. Some sewage sludges already exceed current land application contaminant standards and consequently cannot be used agriculturally or are classified hazardous waste, largely due to their organochlorine content.

Many sludge processing options have been proposed in the past. Such options have the potential to convert a fraction of the organic material into usable energy and even less have been demonstrated as viable net energy producers at full scale. One common process involves anaerobic digestion of sewage sludge in which approximately 25% of available organic materials is converted to produce a gas rich in methane. Historically, other alternatives have included starved air incineration and gasification.

A significant problem associated with the above processes relates to the fact that the principle usable energy-containing products are gases which are generally not easily condensable and are of a low net energy content. Accordingly, such gases are impossible or uneconomic to store and must generally be used immediately. Further, it is generally only practicable to use them to produce relatively low grade energy, such as steam, and flare them to waste during periods of little or no demand. Not surprisingly, it is preferable that any process used result in storable (liquid or solid), transportable and if possible, upgradable energy-containing products. Such products would include synthetic oils. It is consequently desirable that there be optimum production of storagable energy having any non-storable products, used in the operation of the process itself.

Disposal of sewage sludge has become more problematic recently due to the fact that;
a) agricultural use of sewage sludge is restricted by its contaminant content, particularly the organochlorine content, and within this group the dioxins have become the limiting factor,
b) ocean disposal is banned,
c) landfilling is to shortly be banned in the European Union; and
d) incineration of sewage sludge is opposed by the public primarily with respect to the dioxin issue (reformation of dioxin during hot flue gas cooling). Consequently recent research work on thermal sludge disposal processes concentrates on control of organochlorine compounds across the process.

In US Patents 4618735 and 4781796, there is described a process and apparatus for the conversion of sludges by heating and chemical reaction in order to obtain useful storable products therefrom, including oils. The process comprises the steps of heating dried sludge in a heating zone in the absence of oxygen to a temperature of at least 250°C for the volatilization of oil producing organic material therein, resulting in heating zone gaseous products and sludge residue, removing the said gaseous product from the heating zone; thereafter contacting heated sludge residue in a reaction zone with the removed heating zone gaseous products in the absence of oxygen at a temperature of 280°C to 600°C for repeated intimate gas/solid contact at temperatures sufficient to cause gas/solid contact, oil producing reactions to occur within the heating zone, gaseous products catalysed by the heated sludge residue resulting in reaction zone gaseous products containing oil products; removing the reaction zone gaseous products from the reaction zone and separating at least the condensable oil products therefrom.

Also disclosed is an apparatus for the conversion of sludge, said apparatus comprising an enclosure establishing a heated heating zone having an inlet thereto for dried sewage sludge and separate outlets therefrom for heating zone gaseous products and residual heating zone solid products; conveyor means within the heating zone enclosure for conveying solid products from its inlet to its solid products outlet; and enclosure establishing a heated reaction zone having separate inlets thereto for gaseous and solid products and separate outlets therefrom for gaseous and solid products; conveyor means within the reaction zone enclosure for conveying solid products from its solid products inlet to its solid products outlet; a heating zone solid products outlet being connected to the reaction zone solid products inlet for the passage of solid products between them; and duct means connecting the heating zone gaseous products outlet to the reaction zone gaseous products inlet.

In US Patents 5847248 and 5865956 there is disclosed a process and apparatus based on the process and apparatus of US Patents 4618735 and 4781796, with the following improvements.

The gaseous products from the heating zone are transferred to either an indirect or direct condenser with oil/water separation. The resulting oil and/or non-condensable products are injected into a second reactor. Sludge residue or char from the first reactor is transferred to the second reactor by way of a transfer line. The transfer line is equipped with a valve system to ensure that no gaseous products by-pass the condensation system.

In the second reactor, provided with heating means, the heated sludge residue from the first reactor is contacted with the revaporised oil or oil and non-condensable gaseous products from the condensation system in the absence of oxygen at a maximum temperature of 550°C. Such allows reductive, heterogenic, catalytic gas/solid phase reactions for the generation of clean products and high quality oil product. A conveyor and motor is provided to move the solid product or char through the second reactor.

Gaseous products are subsequently removed from the second reactor for passage through a further condenser and oil/water separation system or for ducting to a burner for direct combustion. In the case of passage through a further condenser and oil/water separation system a volume of non-condensable gaseous product, a volume of reaction water and a volume of refined, low viscosity oil is produced. Solid products or char are removed from the second reactor by way of a further transfer line having provided therein a screw conveyor for ensuring both no air ingress into and no gaseous product egress from the second reactor. The screw conveyor is connected to a cooling system to cool the solid product or char to less than 100°C before discharge to atmosphere.

The process and apparatus for the conversion of carbonaceous materials of the present invention has as one object thereof to provide a more simple and cost effective process and apparatus still able to provide the various advantages of the process and apparatus of US Patents 5847248 and 5865956.

### Disclosure of the Invention

In accordance with the present invention there is provided a process for the conversion of sewage sludges, the process characterised by the steps of:
(a) feeding dried sludge through a reactor;
(b) heating the dried sludge in the reactor in the absence of oxygen for the volatilization of oil producing organic materials therein, resulting in gaseous products and sludge residue;
(c) transferring the gaseous products from the reactor to a condensation system to condense the oil product from the gaseous products:
(d) reheating water free oil and/or non-condensable products, if any, from the condensation system in an oil reheater;
(e) transferring the reheated oil and/or non-condensable products, to a catalytic converter and contacting the same with a catalyst provided therein in the absence of oxygen;
(f) removing the gaseous products from the catalytic converter; and
(g) condensing and oil/water separating the gaseous products of the catalytic converter.

Preferably, sludge residue from the reactor is transferred to a storage bin through a valve system for ensuring both no air ingress into and no gaseous product egress from the reactor.

Still preferably, the feeding of the dried sludge through the reactor utilises a feed system that ensures both no air ingress into, and no escape of gaseous products from, the reactor.

The temperature of the reactor is preferably at least 250°C. The temperature of the reactor is still preferably about 450°C.

The condensation system of step (g) preferably comprises a direct condenser. The condensation of step (c) preferably comprises indirect condensation at >100°C.

The direct transfer of gaseous products from the reactor to the catalytic converter preferably takes place in heat traced lines.

The temperature of the catalytic converter is preferably up to 650°C, thereby promoting reductive, catalytic gas/solid phase reactions and substantially eliminating hetero-atoms, including nitrogen, oxygen, sulphur, and halogens. The catalytic converter temperature is preferably in the range of 400 to 550°C. Still preferably, the catalytic converter temperature is in the range of 400 to 420°C.

The catalytic converter may contain a catalyst, the catalyst being chosen from any of zeolite, activated alumina, γ-aluminium oxide, silicon oxide and oxides of alkali, earth alkali and transition metals. Preferably, the catalyst is zeolite.

The process of the present invention may be still further characterised by the step of testing the miscibility of the oil product with a hydrocarbon solvent, for example diesel fuel. In response, the catalytic converter conditions may be modified, thereby optimizing the catalytic conversion of sewage sludge, particularly the elimination of hetero-atoms such as halogens, nitrogen, oxygen and sulphur.

In accordance with the present invention there is further provided a process for the optimisation of the process for the conversion of sewage sludges as set out above with particular relevance to the removal of hetero-atoms to produce a product miscible with a hydrocarbon solvent such as diesel fuel. Oils miscible in a hydrocarbon solvent have lower viscosity, water content and hetero-atom content, i.e. a higher oil quality. Consequently the miscibility with a hydrocarbon solvent can be used as an analytical tool to optimize the process.

In accordance with the present invention there is still further provided an apparatus for the conversion of carbonaceous materials, the apparatus characterised by a feed system for dried material to be conveyed, a reactor, and a catalytic converter, the reactor having a solid product discharge outlet and a transfer line provided for transport of gaseous product to the catalytic converter, characterized in that a first condensation system is provided in-line between the reactor and catalytic converter and a reheater is provided between the first condensation system and the catalytic converter.

The first condensation system preferably includes an oil/water separation system.

The catalytic converter is preferably adapted to contact heated catalyst contained therein with oil or oil and non-condensable products of the condensation system, wherein gaseous products may be removed from the catalytic converter.

A second condensation system is preferably provided to receive gaseous product from the catalytic converter.

### Description of the Drawings

The present invention will now be described, by way of example only, with reference to two embodiments thereof and the accompanying drawings, in which:
Figure 1 is a schematic diagram of an apparatus for the conversion of carbonaceous materials in accordance with a first embodiment of the present invention; and
Figure 2 is a schematic diagram of an apparatus for the conversion of carbonaceous materials in accordance with a second embodiment of the present invention.

### Best Mode(s) for Carrying Out the Invention

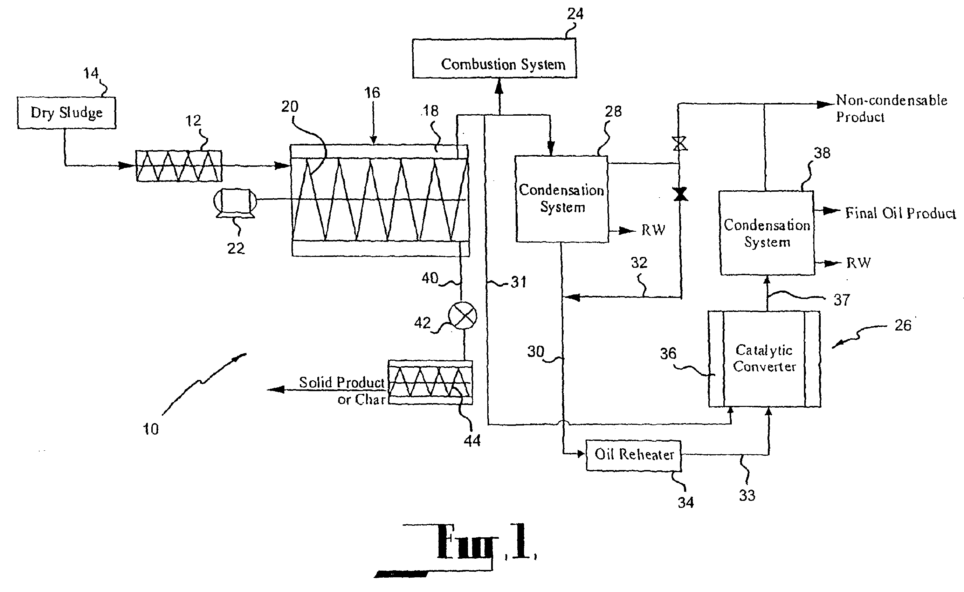

In Figure 1 there is shown an apparatus 10 for the conversion of sludges in accordance with a first embodiment of the present invention. The apparatus comprises a feed system 12 for dried sludge 14. The feed system 12 feeding said sludge 14 to a reactor 16. The feed system 12 is such that it ensures both no air ingress and no gaseous egress from the reactor 16.

The reactor 16 is provided with heating means 18 thereabout, such that dried sludge may be heated therein in the absence of oxygen to at least 250°C. This results in the volatilization of oil producing organic materials in the reactor 16. Further, this reaction provides gaseous products and sludge residue or char. A screw conveyor 20 and a motor 22, or their equivalent, is provided to move the sludge through the reactor 16.

The gaseous products from the reactor 16 are either transferred to a combustion system 24, to a catalytic converter 26 or to a first condensation system 28 with oil/water separation. Further, the first condensation system 28 may comprise either a direct or an indirect condenser. The resulting oil is injected, via line 30, with or without any non-condensable products, via line 32, from the first condensation system 28 into an oil reheater 34 where the oil and/or non-condensable products 32 are heated in the absence of oxygen to a maximum temperature of 650°C.

The gaseous products from the reactor 16 or the preheated oil and/or non-condensable products from the oil reheater 34 are injected into the catalytic converter 26, via lines 31 and 33 respectively. Line 31 from the reactor 16 to the catalytic converter 26 is heat traced. The catalytic converter 26 is provided with a heating means 36 thereabout such that the preheated oil and/or non-condensable products may be heated therein in the absence of oxygen to a maximum temperature of 650°C. This allows reductive, catalytic removal of hetero-atoms to produce an oil product of a viscosity that is lower than that of diesel. The refined gaseous products from the catalytic converter 26 are transferred, via line 37, to a final or second condensation system 38 with oil/water separation.

The solid product or char of the reactor 16 is removed from the reactor 16 by way of a transfer line 40. The transfer line 40 is equipped with a valve system 42 and a screw conveyer (not shown). The valve system 42 is such that it ensures both no air ingress and no gaseous egress from the reactor 16. The screw conveyer is connected to a cooling system 44 to cool the solid products or char to less than 100°C.

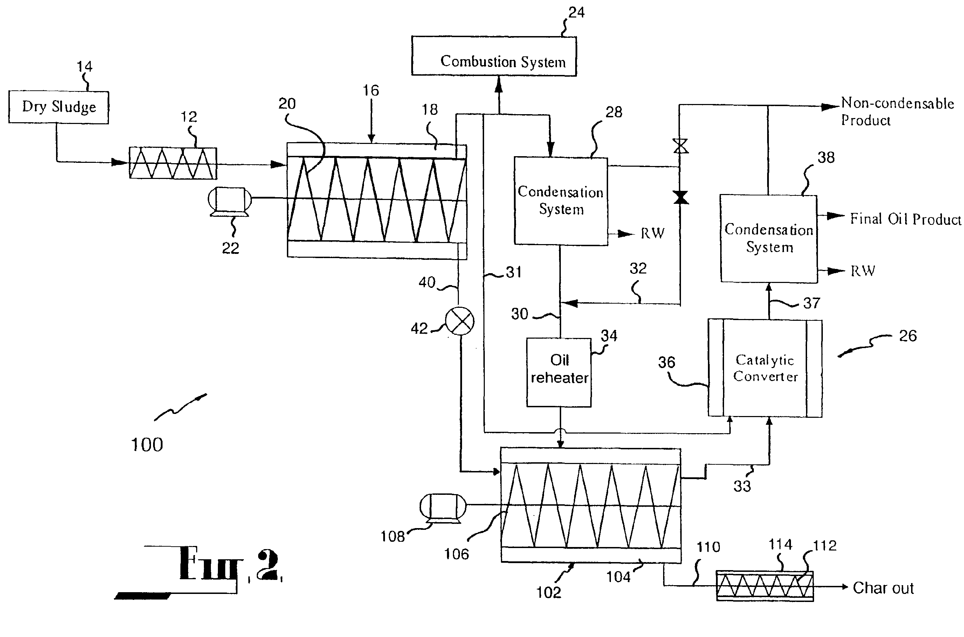

In Figure 2 there is shown an apparatus 100 for the conversion of sludges in accordance with a second embodiment of the present invention. The apparatus 100 is substantially similar to the apparatus 10 and like numerals denote like parts.

A second reactor 102 is provided to receive the solid product or char of the "first" reactor 16 by way of transfer line 40 and the fluid tight valve system 42. The second reactor 102 is provided with heating means 104 thereabout.

Revaporised oil or oil and non-condensable gaseous products from the condensation system 28 are contacted with the char in the second reactor 102 and are heated in the absence of oxygen at a maximum temperature of 550°C. A screw conveyor 106 and motor 108, or their equivalent, are provided to move the solid product or char through the second reactor 102.

The solid products or char are removed from the second reactor 102 by way of a further transfer line 110 having provided therein a screw conveyor 112 for ensuring both no air ingress into and no gaseous product egress from the second reactor 102. The screw conveyor 112 is connected to a cooling system 114 to cool the solid product or char to <100°C before discharge to atmosphere.

Gaseous products of the second reactor 102 are removed for injection to the catalytic converter 26 via line 33.

The present invention may be further described with reference to the following example.

### Example

The sewage sludge employed in the determination of process data using the continuous apparatus of the present invention was raw sludge from two locations, being the Subiaco Waste Water Treatment Plant (WWTP), Perth, Western Australia, and the Atlanta WWTP, Georgia, United States of America. The sludges were dried to approximately 95% dryness in a drying oven at 70°C prior to processing.

The sludges were processed in either the apparatus 10 or the apparatus 100 as described hereinabove.

The first series of tests were conducted to demonstrate the impact of the catalytic converter on oil quality. Results are shown in Table 1.

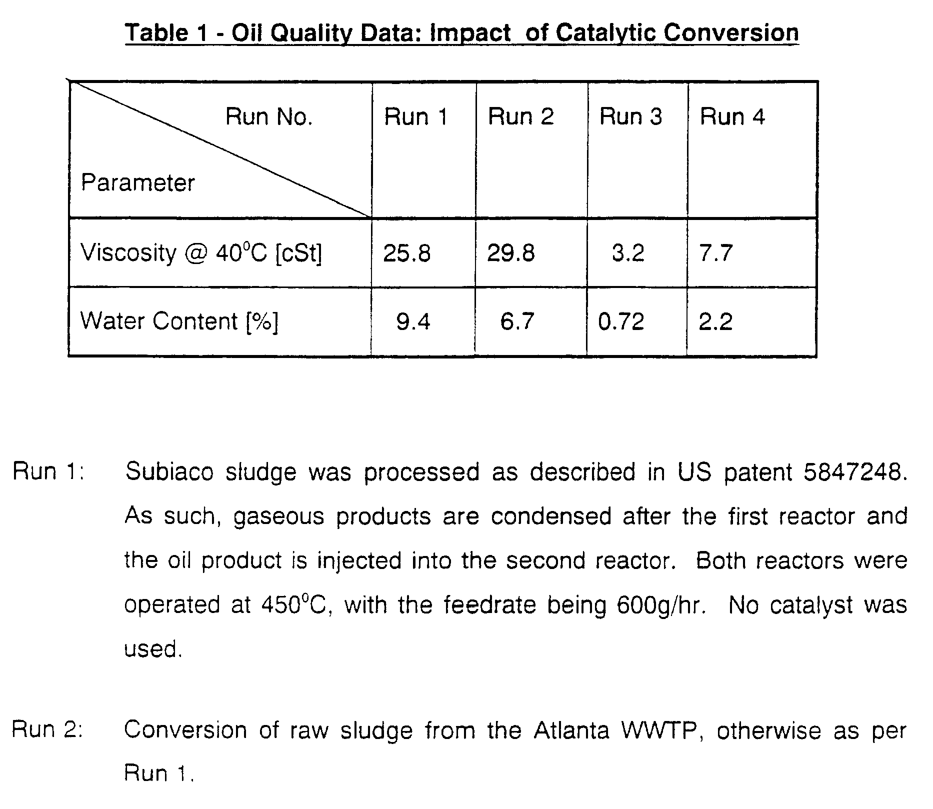

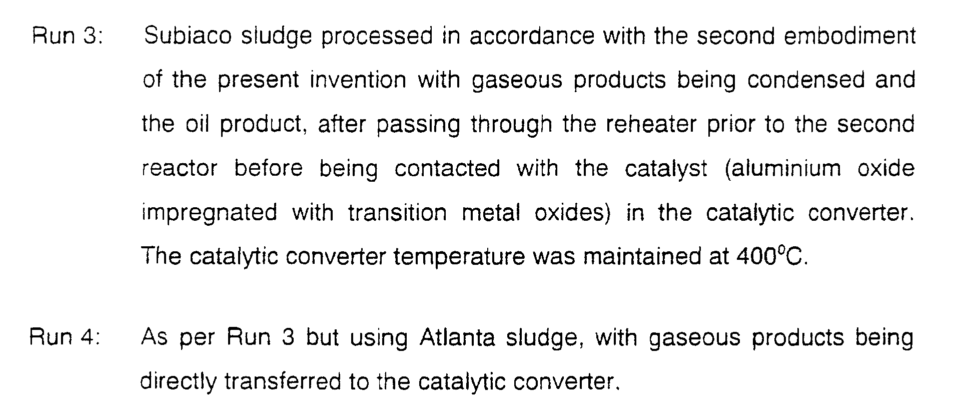

The above results clearly show that the oil viscosity and water content are reduced significantly by the use of the catalytic converter, for example compare Runs 1 and 3, and 2 and 5.

A second series of tests was conducted to determine the influence of catalyst support. Test results are shown in Table 2.

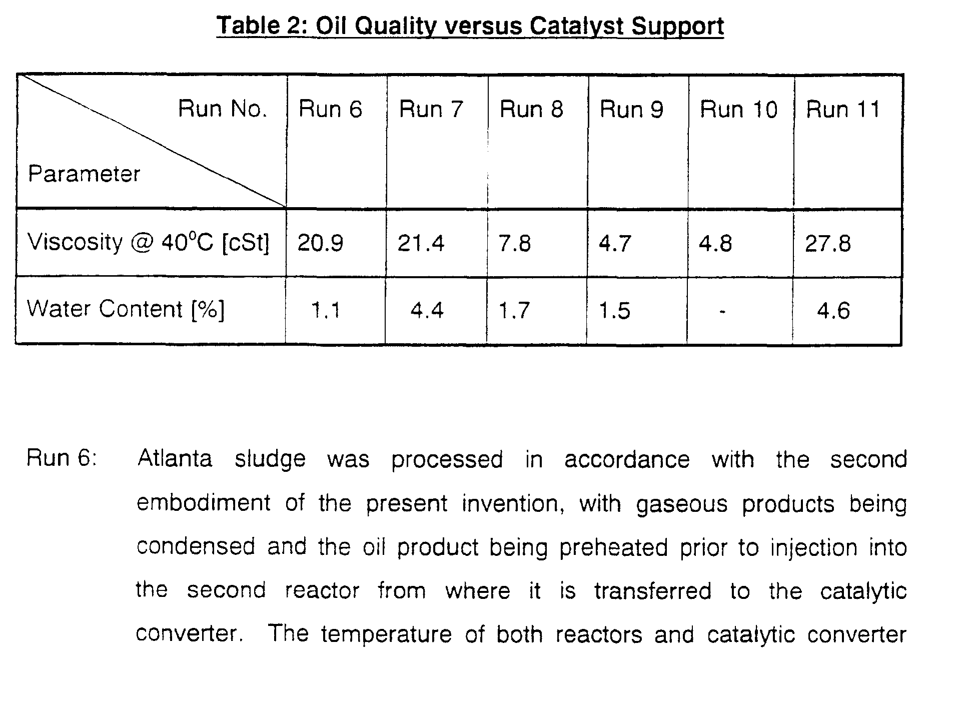

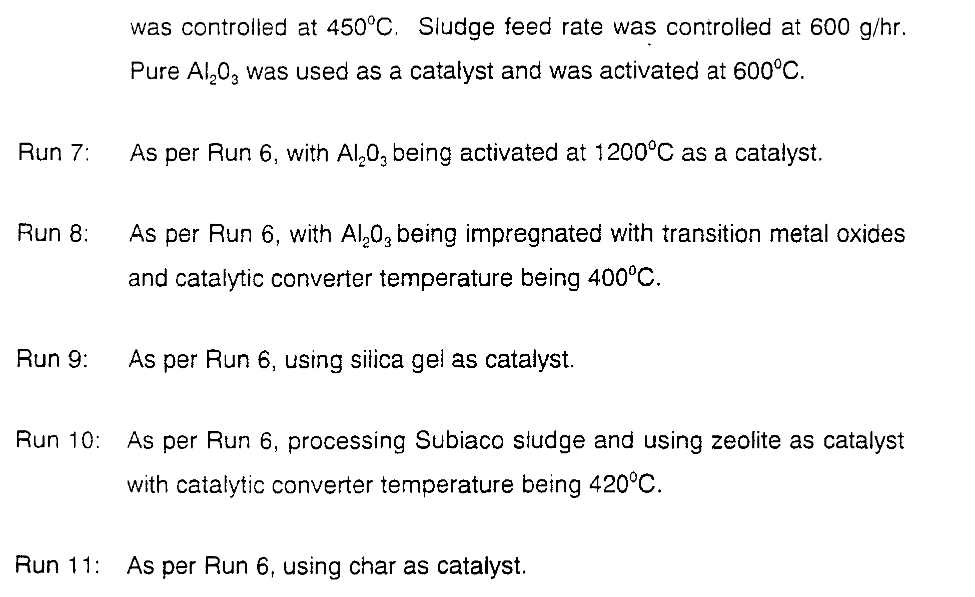

The results show that pure Al₂O₃ is not as good as Al₂O₃ doped with transition metals. Silica gel and zeolite appear to be good catalysts and the conversion char is not as good as Al₂O₃ as a catalyst.

A third series of tests were conducted to assess the impact of catalyst temperature on oil quality and yield. Results are shown in Table 3.

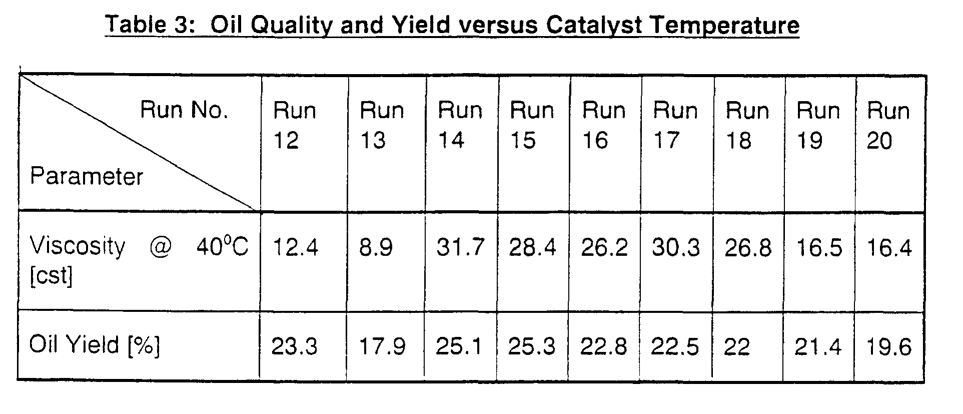

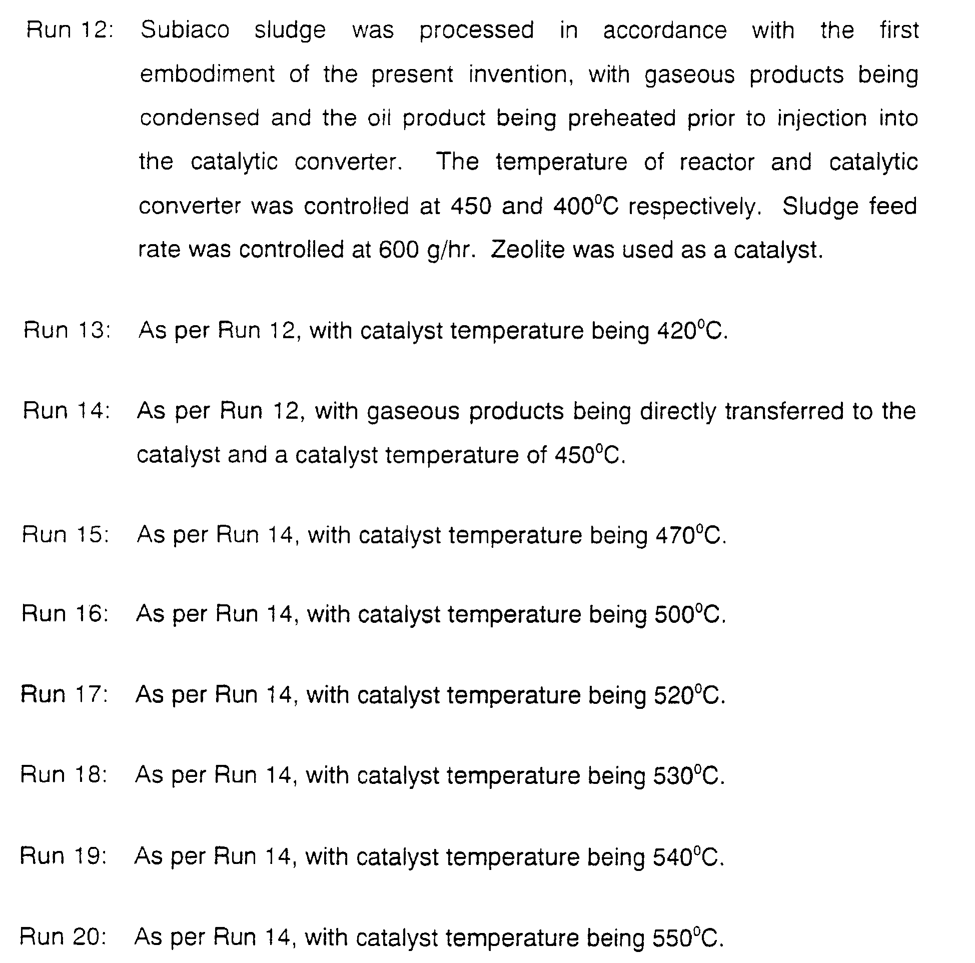

The above results indicate that the optimal temperature for oil quality, when using a zeolite catalyst is 400 to 420°C, with intermediate condensing, and 530-550°C without intermediate condensing. There does appear to be a drop in oil yield when using the zeolite catalyst up to 550°C,

A fourth series of tests were conducted to asses the impact of catalyst to oil vapor ratio on oil quality. Results are shown in Table 4.

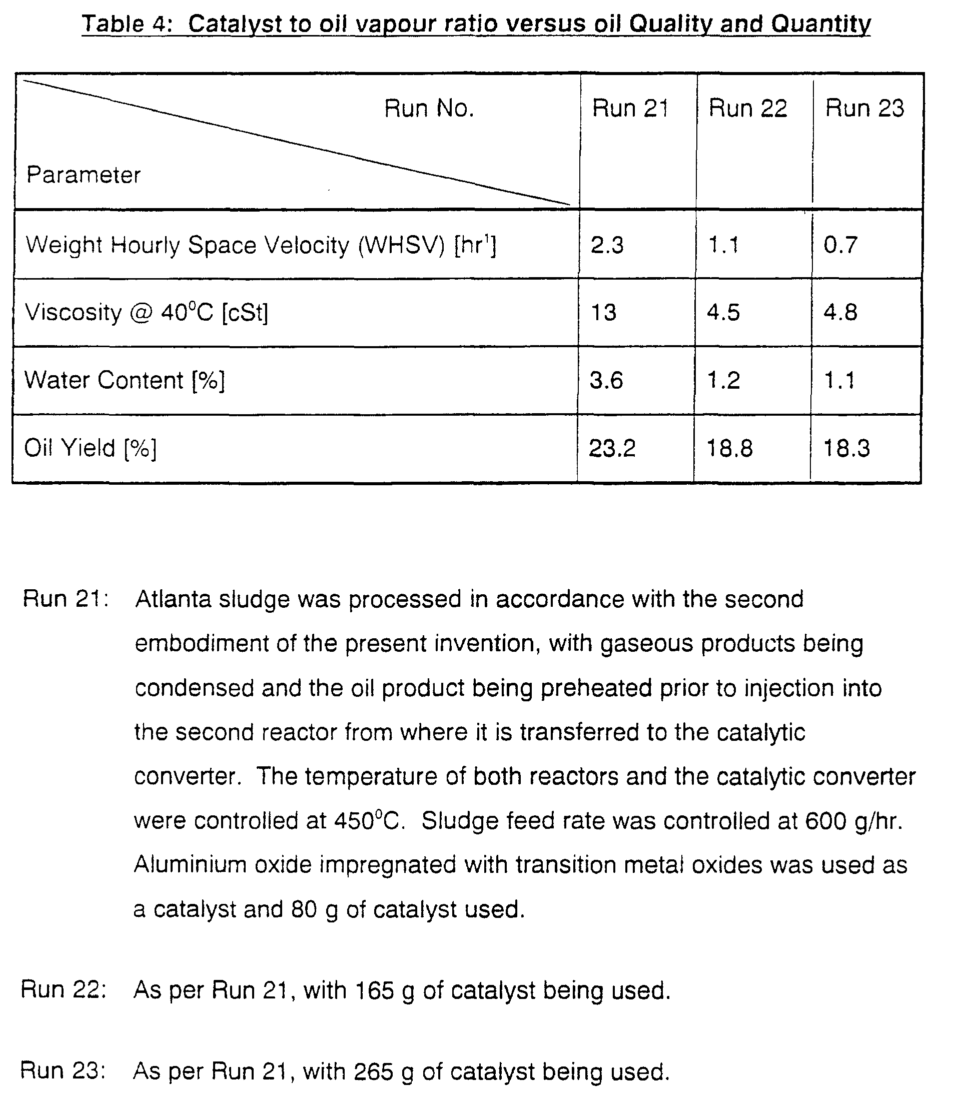

As expected, the results show improved oil quality at lower WHSV (higher catalyst mass), albeit at a reduced oil yield. There does not appear to be any further improvement in oil quality by reducing the WHSV to below 1 hr⁻¹.

A fifth series of tests was conducted to assess the impact of catalyst regeneration on oil quality. Results are shown in Table 5.

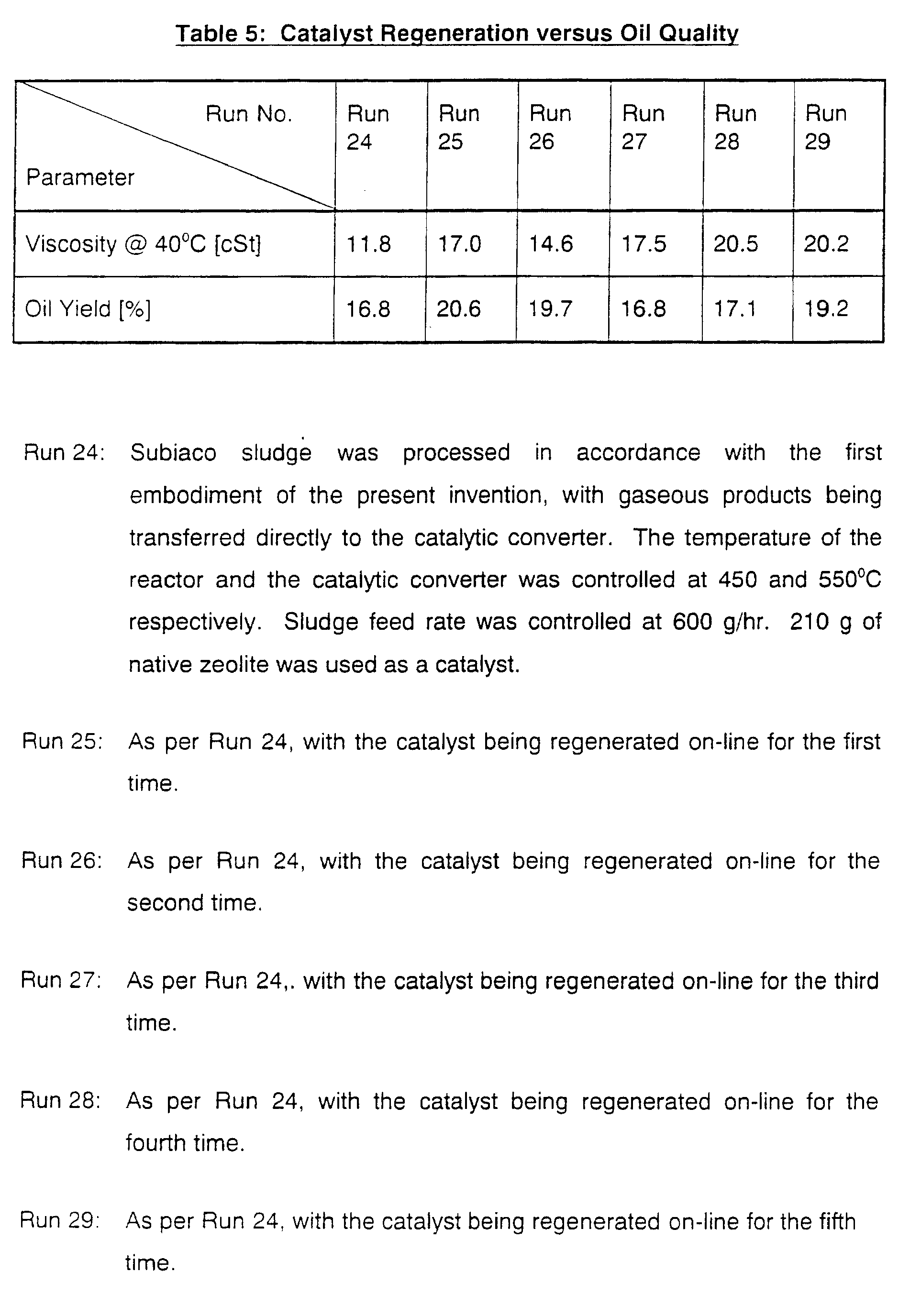

The results show a slight deterioration in catalyst efficacy via on-line regeneration. However, performance appeared to stabilise after 3 or 4 regenerations.

A sixth series of tests were conducted to compare oil yield and quality from the dual reactor system with intermediate condensation and the single reactor system without intermediate condensation. The results are shown in Table 6.

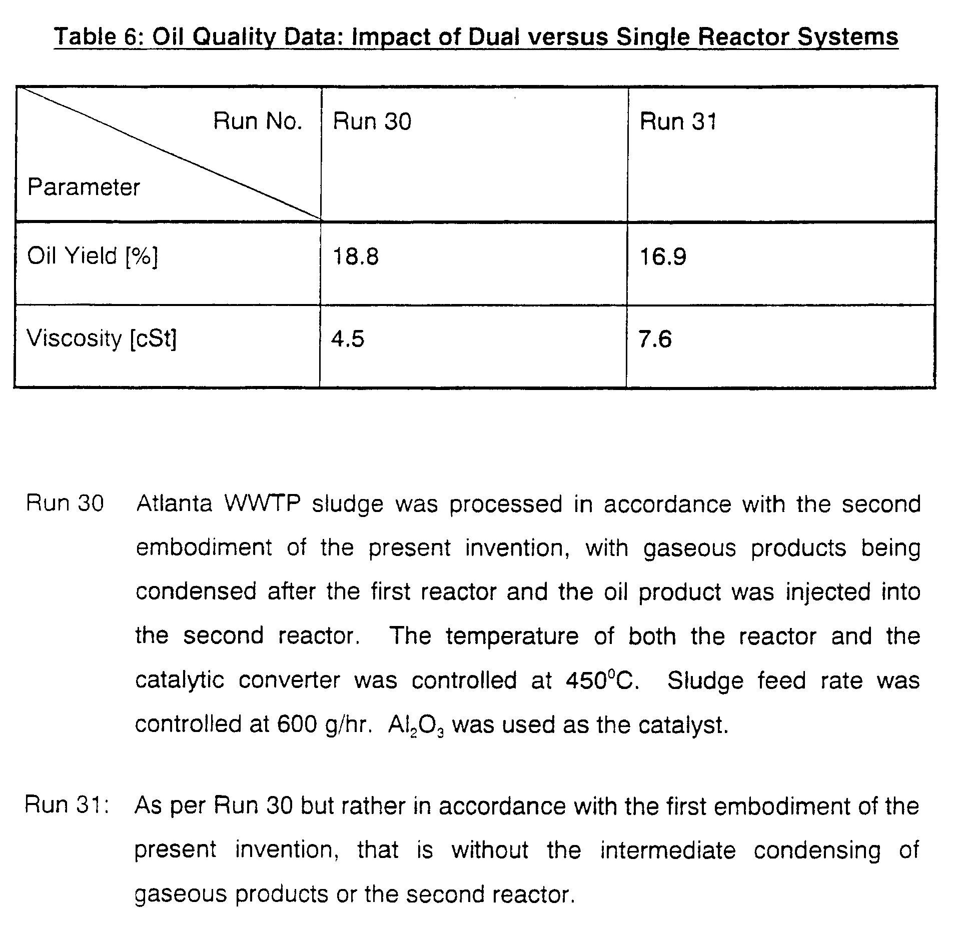

These results indicate that the presence of the second reactor, and the condensation of gaseous products before injection thereto, does not have a significant impact upon oil yield and quality, as might otherwise have been expected, when compared with the apparatus 10 utilising the single reactor 16.

A seventh series of tests were conducted to determine the impact of intermediate condensation on oil quality and yield in the single reactor system. Test results are shown in Table 7.

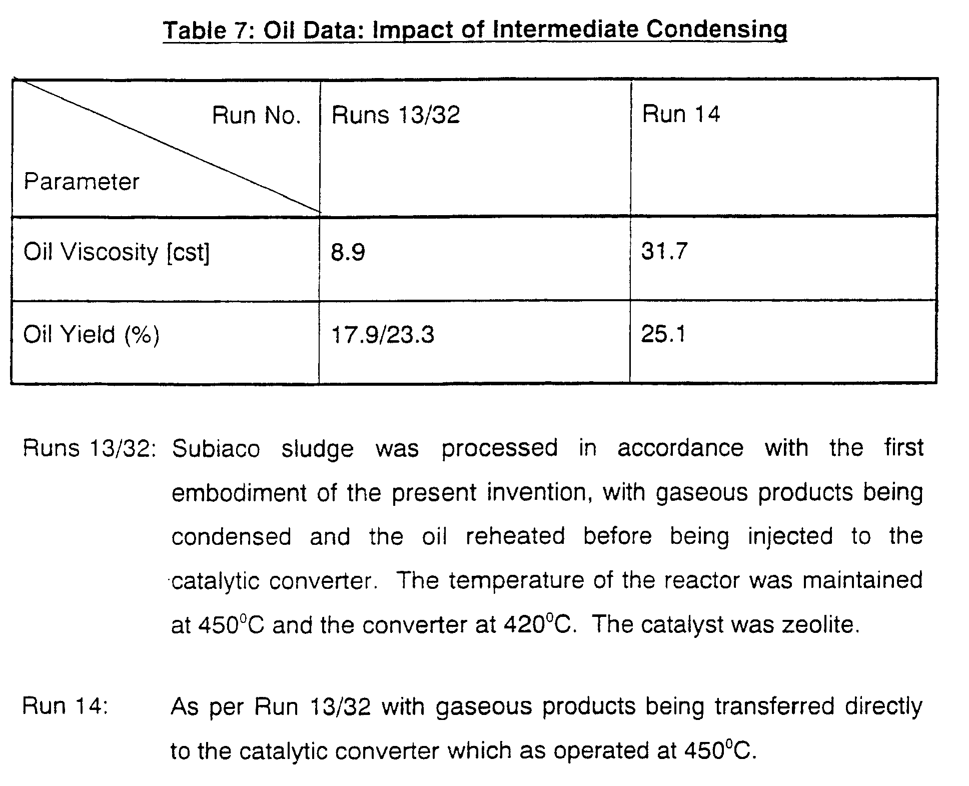

These results indicated that the intermediate condenser has a significant impact on oil quality. There is however, a significant oil yield penalty when using the intermediate condenser.

An eighth series of tests was conducted to determine the temperature at which the catalytic converter must be operated to achieve acceptable results in a single reactor system, without intermediate condensation. Test results are shown in Table 8.

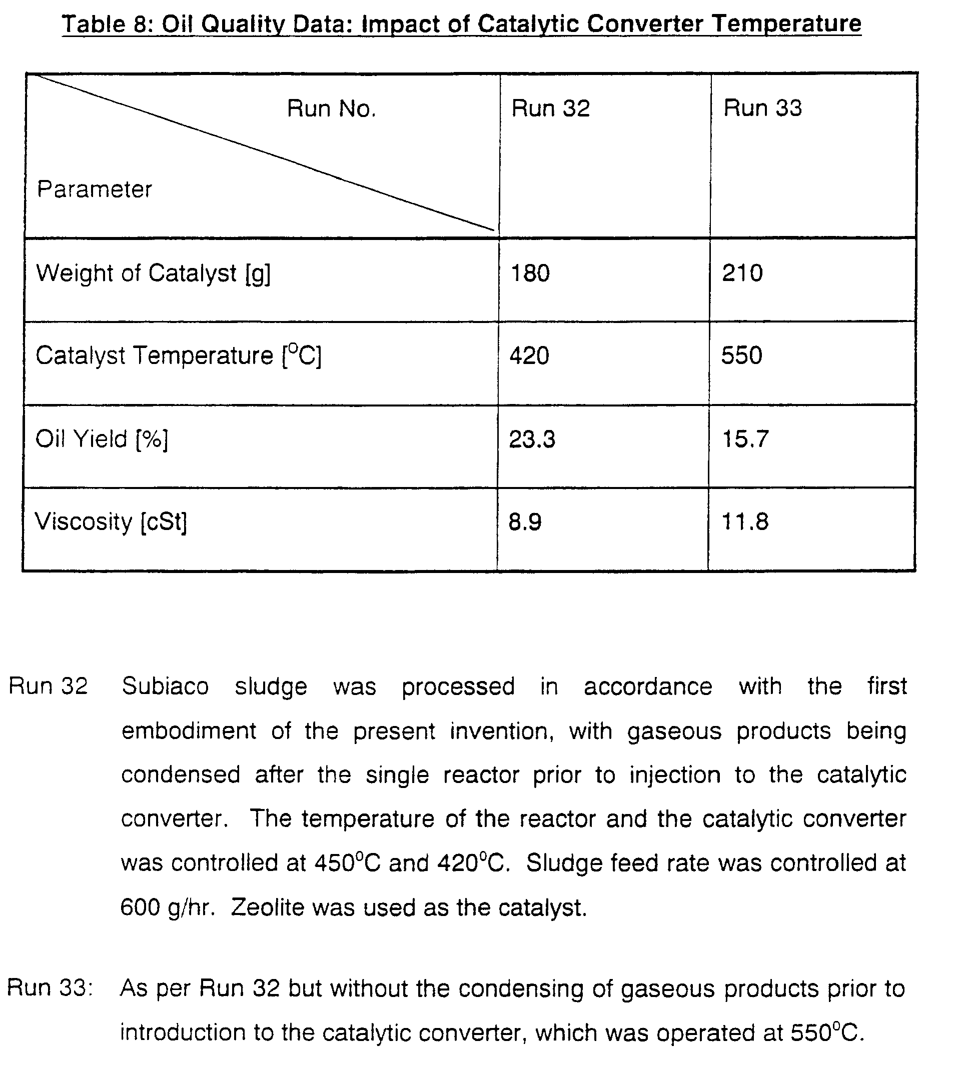

These results indicate that the condensing of the gaseous products of the single reactor prior to injection to the catalytic converter provides an improved oil quality and yield when compared with not having conducted the condensation step, when using zeolite as the catalyst.

These results further indicate that the catalytic converter must be operated at about 130°C higher if it is desired to produce oil of the same quality without intermediate condensation of the gaseous products of the reactor. As seen in Table 8, this produces a significant drop in oil yield.

The process for the conversion of sewage sludges of the present invention may be optimised with regard to removal of hetero-atoms through use of miscibility with a standard hydrocarbon source such as diesel fuel. It is apparent that the miscibility with diesel fuel is significantly influenced by the presence of hetero-atoms such as oxygen, nitrogen and sulphur. Such hetero-atoms particularly oxygen and sulphur and to a lesser degree nitrogen are removed by the catalytic converter generating an oil that is miscible at any ratio with diesel fuel. Accordingly, the miscibility of the oil product is a direct measurement of the quality of the oil. The miscibility can be directly correlated with viscosity, meaning the better mixing the lower the viscosity. As stated in US Patent 5847248, viscosity can also be used as an indicator for the destruction rate of organochlorine compounds and consequently, since the heavy metal oxides present in the catalytic converter are the same as in sewage sludge, the dehalogenation of organochlorines will take place in the catalytic converter at a much higher rate than in the second reactor of US Patents 5847248 and 5865956, and miscibility can also be used as a control tool for organochlorine destruction.

The process and apparatus of the present invention provide reductive, thermal heterogenic catalytic solid/gas phase reactions in order to obtain storable products with unrestricted use.

Modifications and variations such as would be apparent to the skilled addressee are considered to fall within the scope of the present invention.

## Claims

1. A process for the conversion of sewage sludges, the process **characterised by** the steps of:
(a) feeding dried sludge through a reactor;
(b) heating the dried sludge in the reactor in the absence of oxygen for the volatilisation of oil producing organic materials therein, resulting in gaseous products and sludge residue;
(c) transferring the gaseous products from the reactor to a condensation system to condense the oil product from the gaseous products;
(d) reheating water free oil and/or non-condensable products, if any, from the condensation system in an oil reheater;
(e) transferring the reheated oil and/or non-condensable products to a catalytic converter and contacting the same with a catalyst provided therein in the absence of oxygen;
(f) removing the gaseous products from the catalytic converter; and
(g) condensing and oil/water separating the gaseous products of the catalytic converter.

2. A process according to claim 1, wherein sludge residue from the reactor is transferred to a storage bin through a valve system for ensuring both no air ingress into and no gaseous product egress from the reactor.

3. A process according to claim 1 or 2, wherein the feeding of the dried sludge through the reactor utilises a feed system that ensures both no air ingress into, and no escape of gaseous products from, the reactor.

4. A process according to claim 2 or 3, wherein the temperature of the reactor is at least 250°C.

5. A process according to claim 4, wherein the temperature of the reactor is about 450°C.

6. A process according to any one of the preceding claims, wherein the condensation system of step (g) comprises a direct condenser.

7. A process according to any one of the preceding claims, wherein the condensation of step (c) comprises indirect condensation at >100°C.

8. A process according to any one of the preceding claims, wherein the temperature of the catalytic converter is up to 650°C, thereby promoting reductive, catalytic gas/solid phase reactions and substantially eliminating hetero-atoms, including nitrogen, oxygen, sulphur, and halogens.

9. A process according to claim 8, wherein the catalytic converter temperature is in the range of 400 to 550°C.

10. A process according to claim 8, wherein the catalytic converter temperature is in the range of 400 to 420°C.

11. A process according to any one of the preceding claims, wherein the catalyst provided in the catalytic converter is chosen from any of zeolite, activated alumina, γ-aluminium oxide, silicon oxide and oxides of alkali, earth alkali and transition metals.

12. A process according to claim 11, wherein the catalyst is zeolite.

13. A process according to any one of the preceding claims, wherein the process further comprises the step of testing the miscibility of the oil product with a hydrocarbon solvent and modifying the conditions of the catalytic converter in response thereto.

14. A process according to any one of the preceding claims, wherein the oil product of the process is miscible with a hydrocarbon solvent.

15. A process according to claim 14, wherein the solvent is diesel fuel.

16. An apparatus for the conversion of carbonaceous materials, the apparatus **characterised by** a feed system for dried material to be conveyed, a reactor, and a catalytic converter, the reactor having a solid product discharge outlet and a transfer line provided for transport of gaseous product to the catalytic converter, **characterised in that** a first condensation system is provided in-line between the reactor and catalytic converter, and a reheater is provided between the first condensation system and the catalytic converter.

17. Apparatus according to claim 16, wherein the first condensation system includes an oil/water separation system.

18. Apparatus according to claim 16 or 17, wherein the catalytic converter is adapted to contact heated catalyst contained therein with oil or oil and non-condensable products of the condensation system, wherein gaseous products may be removed from the catalytic converter.

19. Apparatus according to any one of claims 17 to 21, wherein a second condensation system is provided to receive gaseous product from the catalytic converter.

## Patentansprüche

1. Verfahren zur Umwandlung von Klärschlämmen, wobei das Verfahren durch die nachfolgenden Schritte **gekennzeichnet** ist:
(a) ein Einspeisen eines getrockneten Schlammes durch einen Reaktor;
(b) ein Erhitzen des getrockneten Schlammes in dem Reaktor bei Abwesenheit von Sauerstoff zur Verflüchtigung der darin enthaltenen Öl erzeugenden, organischen Materialien, was zu gasförmigen Produkten und einem aus Schlamm bestehenden Rückstand führt;
(c) ein Überführen der gasförmigen Produkte aus dem Reaktor in ein Kondensationssystem, um das Ölprodukt von den gasförmigen Produkten zu kondensieren;
d) ein Wiedererbitzen von wasserfreien Ölprodukten und / oder nicht kondensierbaren Produkten, falls irgendwelche vorhanden sind, aus dem Kondensationssystem in einem Öl-Wiedererhitzer;
e) ein Überführen des Reaktors oder der wieder erhitzten Ölprodukte und /oder der nicht kondensierbaren Produkte in einen katalytischen Konverter und ein Herstellen des Kontaktes zwischen denselben und einem in deaaselben vorgesehenen Katalysator in Abwesenheit von Sauerstoff;
(f) ein Entfernen der gasförmigen Produkte aus dem katalytischen Konverter; und
(g) ein Kondensieren und eine Öl/Wasser Trennung der gasförmigen Produkte des katalytischen Konverters.

2. Verfahren gemäß Anspruch 1, bei welchem der Schlammrückstand aus dem Reaktor durch ein ventilsystem hindurch zu einem Lagerbehälter überführt wird, um so zu gewährleisten, dass sowohl keine Luft in den Reaktor eindringt als auch dass kein gasförmiges Produkt aus dem Reaktor heraustritt.

3. Verfahren gemäß Anspruch 1 oder 2, bei welchem das Einspeisen des getrockneten Schlammes durch den Reaktor ein Einspeisesystem verwendet, welches gewährleistet, dass sowohl keine Luft in den Reaktor eindringt als auch dass keine gasförmigen Produkte aus dem Reaktor entweichen.

4. Verfahren gemäß Anspruch 2 oder 3, bei welchem die Temperatur des Reaktors mindestens 250°C beträgt.

5. Verfahren gemäß Anspruch 4, bei welchem die Temperatur des Reaktors etwa bei 450°C Liegt.

6. Verfahren gemäß irgendeinem der vorhergehenden Ansprüche, bei welchem das Kondensationssystem nach Schritt (g) einen Direktkondensator umfasst.

7. Verfahren gemäß irgendeinem der vorhergehenden Ansprüche, bei welchem die Kondensation nach Schritt (c) eine indirekte Kondensation bei > 100°C umfasst

8. Verfahren gemäß irgendeinem der vorhergehenden Ansprüche, bei welchem die Temperatur des katalytischen Konverters bis zu 650°C beträgt, wodurch die reduzierenden, katalytischen Reaktionen in den Gas-/Fest-Phasen gefördert werden und Heteroatome, einschließlich Stickstoff, Sauerstoff, Schwefel und Halogene im Wesentlichen ausgeschlossen werden.

9. Verfahren gemäß Anspruch 8, bei welchem die Temperatur des katalytischen Konverters in dem Bereich von 400 bis 550°C liegt.

10. Verfahren gemäß Anspruch 8, bei welchem die Temperatur des katalytischen Konverters in dem Bereich von 400 bis 420°C liegt.

11. Verfahren gemäß irgendeinem der vorhergehenden Ansprüche, bei welchem der in dem katalytischen Konverter vorgesehene Katalysator ausgewählt wird unter irgendeinem der Produkte; Zeolith, aktiviertes Aluminiumoxid, γ-Aluminiumoxid, Siliziumoxid und Oxide der Alkali-, Erdalkali- und Übergangsmetalle.

12. Verfahren gemäß Anspruch 11, bei welchem der Katalysator aus Zeolith besteht.

13. Verfahren gemäß irgendeinem der vorhergehenden Ansprüche, bei welchem das Verfahren weiterhin den dahingehenden Schritt umfasst, die Mischbarkeit des Ölproduktes mit einem aus Kohlenwasserstoff bestehenden Lösungsmittel zu testen und die Bedingungen des katalytischen Konverters als Antwort hierauf zu verändern.

14. Verfahren gemäß irgendeinem der vorhergehenden Ansprüche, bei welchem das Ölprodukt des Verfahrens mit einem aus Kohlenwasserstoff bestehenden Lösungsmittel mischbar ist.

15. Verfahren gemäß Anspruch 14, bei welchem das Lösungsmittel Dieselkraftstoff ist.

16. Vorrichtung für die Umwandlung von kohlenstoffhaltigen Materialien, wobei die Vorrichtung **gekennzeichnet ist durch** ein Zuführungssystem für getrocknetes zu beförderndes Material **durch** einen Reaktor und **durch** einen katalytischen Konverter, wobei der Reaktor einen Ausgang zum Entladen von Feststoffprodukten aufweist und eine Überführungslinie, welche für den Transport von gasförmigen Produkten zu dem katalytischen Konverter vorgesehen ist, und weiter **dadurch gekennzeichnet ist**, dass ein erstes Kondensationssystem in-line bereitgestellt wird zwischen dem Reaktor und dem katalytischen Konverter und dass ein Zwischenerhitzer zwischen dem ersten Kondensationssystem und dem katalytischen Konverter bereitgestellt wird.

17. Vorrichtung gemäß Anspruch 16, bei welcher das erste Kondensationssystem ein Öl/Wasser-Trennsystem umfasst.

18. Vorrichtung gemäß Anspruch 16 oder 17, bei welcher der katalytische Konverter angepasst ist zum Herstellen des Kontaktes zwischen dem in demselben enthaltenen erhitzten Katalysator mit Öl oder mit Öl und nicht kondensierbaren Produkten aus dem Kondensationssystem, wobei gasförmige Produkte aus dem katalytischen Konverter entfernt werden können.

19. Vorrichtung gemäß irgendeinem der Ansprüche 17 oder 21, bei welcher ein zweites Kondensationssystem bereitgestellt wird, um die gasförmigen Produkte aus dem katalytischen Konverter aufzunehmen.

## Revendications

1. Procédé pour la conversion de boues d'épuration, le procédé étant **caractérisé par** les étapes:
(a) d'alimentation d'une boue séchée à travers un réacteur;
(b) de chauffage de la boue séchée dans le réacteur en l'absence d'oxygène pour l'évaporation de matières organiques produisant une huile dans celui-ci, conduisant à des produits gazeux et à un résidu de boue;
(c) de transfert des produits gazeux depuis le réacteur vers un système de condensation pour condenser le produit d'huile à partir des produits gazeux;
(d) de réchauffage de l'huile sans eau et/ou de produits non condensables, s'ils sont présents, provenant du système de condensation dans un réchauffeur d'huile;
(e) de transfert du réacteur ou de l'huile et/ou des produits non condensables réchauffés vers un convertisseur catalytique et de mise en contact de ces derniers avec un catalyseur fourni dans celui-ci en l'absence d'oxygène;
(f) de retrait des produits gazeux à partir du convertisseur catalytique; et
(g) de condensation et de séparation huile/eau des produits gazeux du convertisseur catalytique.

2. Procédé suivant la revendication 1, dans lequel le résidu de boue provenant du réacteur est transféré vers un réservoir de stockage à travers un système de soupape pour assurer à la fois qu'il n'entre pas d'air dans le réacteur et qu'il ne sort pas de produits gazeux de celui-ci.

3. Procédé suivant la revendication 1 ou 2, dans lequel l'alimentation de la boue séchée à travers le réacteur utilise un système d'alimentation qui assure à la fois qu'il n'entre pas d'air dans le réacteur et qu'il ne s'échappe pas de produits gazeux à partir de celui-ci.

4. Procédé suivant la revendication 2 ou 3, dans lequel la température du réacteur est d'au moins 250°C.

5. Procédé suivant la revendication 4, dans lequel la température du réacteur est d'environ 450°C.

6. Procédé suivant l'une quelconque des revendications précédentes, dans lequel le système de condensation de l'étape (g) comprend un condenseur direct.

7. Procédé suivant l'une quelconque des revendications précédentes, dans lequel la condensation de l'étape (c) comprend une condensation indirecte à > 100°C.

8. Procédé suivant l'une quelconque des revendications précédentes, dans lequel la température du convertisseur catalytique est jusqu'à 650°C, stimulant ainsi des réactions en phase gazeuse/liquide catalytiques, réductrices et éliminant substantiellement les hétéroatomes, y compris l'azote, l'oxygène, le soufre et les halogènes.

9. Procédé suivant la revendication 8, dans lequel la température du convertisseur catalytique est dans l'intervalle de 400 à 550°C.

10. Procédé suivant la revendication 8, dans lequel la température du convertisseur catalytique est dans l'intervalle de 400 à 420°C.

11. Procédé suivant l'une quelconque des revendications précédentes, dans lequel le catalyseur fourni dans le convertisseur catalytique est choisi parmi n'importe lequel de zéolite, d'alumine activée, de γ-oxyde d'aluminium, d'oxyde de silicium et d'oxydes de métaux alcalins, alcalino-terreux et de transition.

12. Procédé suivant la revendication 11, dans lequel le catalyseur est une zéolite.

13. Procédé suivant l'une quelconque des revendications précédentes, dans lequel le procédé comprend en outre l'étape d'essai de la miscibilité du produit d'huile avec un solvant hydrocarbure et de modifieation des conditions du convertisseur catalytique en réponse à cet essai.

14. Procédé suivant l'une quelconque des revendications précédentes, dans lequel le produit d'huile du procédé est miscible avec un solvant hydrocarbure.

15. Procédé suivant la revendication 14, dans lequel le solvant est un carburant diesel.

16. Appareil pour la conversion de matières carbonées, l'appareil étant **caractérise par** un système d'alimentation pour une matière séchée à convoyer, un réacteur et un convertisseur catalytique, le réacteur possédant une sortie de décharge de produits solides et une ligne de transfert foumie pour le transport d'un produit gazeux vers le convertisseur catalytique, **caractérisé en ce qu'**un premier système de condensation est prévu en ligne entre le réacteur et le convertisseur catalytique, et un réchauffeur est prévu entre le premier système de condensation et le convertisseur catalytique.

17. Appareil suivant la revendication 16, dans lequel le premier système de condensation inclut un système de séparation huile/eau.

18. Appareil suivant la revendication 16 ou 17, dans lequel le convertisseur catalytique est adapté pour mettre en contact un catalyseur chauffé contenu dans celui-ci avec une huile ou une huile et des produits non condensables du système de condensation, dans lequel les produits gazeux peuvent être retirés du convertisseur catalytique.

19. Appareil suivant l'une quelconque des revendications 17 à 21, dans lequel un deuxième système de condensation est prévu pour recevoir des produits gazeux provenant du convertisseur catalytique.
